# EUROPEAN PATENT APPLICATION

(11) **EP 4 343 595 A1**
(43) Date of publication of application: **27.03.2024**
(21) Application number: 22913120.6
(22) Date of filing: 16.05.2022
(51) Int. Cl.: G06F 21/57

(54) **VIRTUAL-MACHINE MEMORY INTEGRITY PROTECTION METHOD, APPARATUS, ELECTRONIC DEVICE, AND STORAGE MEDIUM**

(30) Priority: 30.12.2021 CN 202111680867
(71) Applicant: Hygon Information Technology Co., Ltd., Tianjin 300392 (CN)
(72) Inventor: JIANG, Xin, Tianjin 300392 (CN); YING, Zhiwei, Tianjin 300392 (CN); LIU, Zixing, Tianjin 300392 (CN)
(74) Representative: Regimbeau
(86) International application number: PCT/CN2022/092979
(87) International publication number: WO 2023/123824

(57) **Abstract**

Embodiments of the present disclosure provide a virtual-machine memory integrity protection method, apparatus, electronic device, and storage medium. The virtual-machine memory integrity protection method comprises: when data is written into a DRAM, encrypting the data to obtain a ciphertext; if it is confirmed that an address corresponding to the data to be written is an isolated memory, calculating the MAC value of the ciphertext and storing the ciphertext and the MAC value in the DRAM; when the data is read, decrypting the data to be read to obtain a plaintext; sending the plaintext to the CPU; if it is confirmed that the address corresponding to the data to be read is an isolated memory, then obtaining from the DRAM a stored original MAC value corresponding to the data to be read, calculating a new MAC value of the data to be read, and comparing the original MAC value with the new MAC value; if equal, then indicating that the data is complete, and if not equal, then indicating that the data has been altered and generating an exception signal. Embodiments of the present disclosure can be used for providing memory integrity protection for a memory of a memory isolation-type virtual machine, and the memory data in the virtual machine is prevented from being illicitly altered.

## Description

### CROSS-REFERENCE TO RELATED APPLICATION

The present application claims the priority to Chinese Patent Application No. 202111680867.2, filed on December 30, 2021, the entire disclosure of which is incorporated herein by reference as portion of the present application.

### TECHNICAL FIELD

Embodiments of the present disclosure relate to a method for virtual machine memory integrity protection, an apparatus, an electronic device, and a storage medium.

### BACKGROUND

In recent years, some new hardware vulnerabilities have been discovered, e.g., Dynamic Random Access Memory (DRAM) rowhammer. This vulnerability allows a memory of an isolated Virtual Machine (VM) to be tampered with under certain conditions, affecting system operations. Due to process defects in the DRAM semiconductor itself, parasitic capacitance, electron migration, hot carrier injection, and the like between adjacent memory units can lead to changes in the charge of adjacent memory units, resulting in errors in stored data.

### SUMMARY

At least one embodiment of the disclosure provides a method for virtual machine memory integrity protection, being applicable to a memory controller in an electronic device, the electronic device comprises a Central Processing Unit (CPU), the memory controller, a Dynamic Random Access Memory (DRAM), and a secure processor, the electronic device is provided with at least one memory-isolated virtual machine, and the method comprises: encrypting data to be written to obtain a ciphertext, when the CPU writes the data into the DRAM via the memory controller for the memory-isolated virtual machine; calculating a Message Authentication Code (MAC) value of the ciphertext by utilizing a MAC key pre-stored and storing the ciphertext and the MAC value into the DRAM, in a case where an address corresponding to the data to be written being an isolated memory of the memory-isolated virtual machine is confirmed; decrypting data to be read to obtain a plaintext, when the CPU reads the data from the DRAM via the memory controller for the memory-isolated virtual machine; sending the plaintext to the CPU; and in a case where an address corresponding to the data to be read being an isolated memory of the memory-isolated virtual machine is confirmed, acquiring, from the DRAM, a stored original MAC value corresponding to the data to be read, calculating a new MAC value of the data to be read by utilizing the MAC key, and comparing the original MAC value with the new MAC value, in which if the original MAC value and the new MAC value are equal to each other, the data is indicated to be integral, and if the original MAC value and the new MAC value are not equal to each other, the data is indicated to have been tampered with and an error signal is generated.

For example, in a method provided by an embodiment of the present disclosure, the MAC value is obtained by a calculation by utilizing a hash-based message authentication code algorithm; and/or the MAC key is randomly generated, by the secure processor, for the memory-isolated virtual machine when the memory-isolated virtual machine is started.

For example, in a method provided by an embodiment of the present disclosure, the electronic device is provided with an identifier bit for controlling whether a memory integrity protection feature is enabled or not; calculating a Message Authentication Code (MAC) value of the ciphertext by utilizing a MAC key pre-stored and storing the ciphertext and the MAC value into the DRAM, in a case where an address corresponding to the data to be written being an isolated memory of the memory-isolated virtual machine is confirmed, comprises: determining whether the memory integrity protection feature is enabled or not according to the identifier bit; and calculating the MAC value of the ciphertext by utilizing the MAC key pre-stored and storing the ciphertext and the MAC value into the DRAM, in a case where the memory integrity protection feature is enabled and the address corresponding to the data to be written being an isolated memory of the memory-isolated virtual machine is confirmed; in a case where an address corresponding to the data to be read being an isolated memory of the memory-isolated virtual machine is confirmed, acquiring, from the DRAM, a stored original MAC value corresponding to the data to be read, calculating a new MAC value of the data to be read by utilizing the MAC key, and comparing the original MAC value with the new MAC value, in which if the original MAC value and the new MAC value are equal to each other, the data is indicated to be integral, and if the original MAC value and the new MAC value are not equal to each other, the data is indicated to have been tampered with and an error signal is generated, comprises: determining whether the memory integrity protection feature is enabled or not according to the identifier bit; and in a case where the memory integrity protection feature is enabled and the address corresponding to the data to be read being an isolated memory of the memory-isolated virtual machine is confirmed, acquiring, from the DRAM, the stored original MAC value corresponding to the data to be read, calculating the new MAC value of the data to be read by utilizing the MAC key, and comparing the original MAC value with the new MAC value, in which if the original MAC value and the new MAC value are equal to each other, the data is indicated to be integral, and if the original MAC value and the new MAC value are not equal to each other, the data is indicated to have been tampered with and an error signal is generated.

For example, in a method provided by an embodiment of the present disclosure, before encrypting data to be written to obtain a ciphertext, when the CPU writes the data into the DRAM via the memory controller for the memory-isolated virtual machine, the method comprises: receiving a nested page fault error notification sent by a host, when a nested page fault occurs with the memory-isolated virtual machine accessing a memory virtual machine physical address GPA, in which the nested page fault error notification contains the GPA to be accessed, and in a case where the GPA to be accessed being an isolated memory is confirmed by the secure processor, the secure processor is configured to assign a host physical address (HPA) corresponding to the isolated memory for the memory-isolated virtual machine, send an initialization request to initialize a memory page of the HPA, and update a virtual machine nested page table; and calculating a MAC value of initialized data by utilizing the MAC key pre-stored and storing the initialized data and the MAC value into the DRAM, after receiving the initialization request from the secure processor.

At least one embodiment of the disclosure further provides an apparatus for virtual machine memory integrity protection, being applicable to a memory controller in an electronic device, the electronic device comprises a Central Processing Unit (CPU), the memory controller, a Dynamic Random Access Memory (DRAM), and a secure processor, the electronic device is provided with at least one memory-isolated virtual machine, and the apparatus comprises: an encryption module, configured to encrypt data to be written to obtain a ciphertext, when the CPU writes the data into the DRAM via the memory controller for the memory-isolated virtual machine; a storage module, configured to calculate a MAC value of the ciphertext by utilizing a MAC key pre-stored and store the ciphertext and the MAC value into the DRAM, in a case where an address corresponding to the data to be written being an isolated memory of the memory-isolated virtual machine is confirmed; a decryption module, configured to decrypt data to be read to obtain a plaintext, when the CPU reads the data from the DRAM via the memory controller for the memory-isolated virtual machine; a sending module, configured to send the plaintext to the CPU; and a comparison module, configured to, in a case where an address corresponding to the data to be read being an isolated memory of the memory-isolated virtual machine is determined, acquire, from the DRAM, a stored original MAC value corresponding to the data to be read, calculate a new MAC value of the data to be read by utilizing the MAC key, and compare the original MAC value with the new MAC value, in which if the original MAC value and the new MAC value are equal to each other, the data is indicated to be integral, and if the original MAC value and the new MAC value are not equal to each other, the data is indicated to have been tampered with and an error signal is generated.

For example, in an apparatus provided by an embodiment of the present disclosure, the MAC value is obtained by a calculation by utilizing a hash-based message authentication code algorithm; and/or the MAC key is randomly generated, by the secure processor, for the memory-isolated virtual machine when the memory-isolated virtual machine is started.

For example, in an apparatus provided by an embodiment of the present disclosure, the electronic device is provided with an identifier bit for controlling whether a memory integrity protection feature is enabled or not; the storage module comprises: a first determination sub-unit, configured to determine whether the memory integrity protection feature is enabled or not according to the identifier bit; and a storage sub-unit, configured to calculate the MAC value of the ciphertext by utilizing the MAC key pre-stored and store the ciphertext and the MAC value into the DRAM, in a case where the memory integrity protection feature is enabled and the address corresponding to the data to be written being an isolated memory of the memory-isolated virtual machine is confirmed; and the comparison module comprises: a second determination sub-unit, configured to determine whether the memory integrity protection feature is enabled or not according to the identifier bit; and a comparison sub-unit, configured to, in a case where the memory integrity protection feature is enabled and the address corresponding to the data to be read being an isolated memory of the memory-isolated virtual machine is confirmed, acquire, from the DRAM, the stored original MAC value corresponding to the data to be read, calculate the new MAC value of the data to be read by utilizing the MAC key, and compare the original MAC value with the new MAC value, in which if the original MAC value and the new MAC value are equal to each other, the data is indicated to be integral, and if the original MAC value and the new MAC value are not equal to each other, the data is indicated to have been tampered with and an error signal is generated.

For example, an apparatus provided by an embodiment of the present disclosure further comprises a receiving module, configured to receive a nested page fault error notification sent by a host, when a nested page fault occurs with the memory-isolated virtual machine accessing a memory virtual machine physical address GPA, in which the nested page fault error notification contains the GPA to be accessed, and in a case where the GPA to be accessed being an isolated memory is confirmed by the secure processor, the secure processor is configured to assign a host physical address (HPA) corresponding to the isolated memory for the memory-isolated virtual machine, send an initialization request to initialize a memory page of the HPA, and update a virtual machine nested page table; and an initialization module, configured to calculate a MAC value of initialized data by utilizing the MAC key pre-stored and store the initialized data and the MAC value into the DRAM, after receiving the initialization request from the secure processor.

At least one embodiment of the disclosure further provides an electronic device, comprising a housing, a processor, a memory, a circuit board, and a power supply circuit, in which the circuit board is provided inside a space enclosed by the housing; the processor and the memory are provided on the circuit board; the power supply circuit is configured to supply power for circuits or components of the electronic device; the memory is configured to store executable program code; and the processor is configured to execute the method according to any one of the embodiments of the present disclosure, by reading the executable program code stored in the memory to execute a program corresponding to the executable program code.

At least one embodiment of the disclosure further provides a computer-readable storage medium, storing one or more programs, in which the one or more programs is capable of being executed by one or more processors to implement the method according to any one of the embodiments of the present disclosure.

### BRIEF DESCRIPTION OF DRAWINGS

In order to more clearly illustrate the embodiments of the present disclosure, the drawings that need to be used in the embodiments will be briefly described in the following. Apparently, the drawings in the following description are only some embodiments of the present disclosure. For those skilled in the art, other drawings can also be obtained based on these drawings without any inventive work.
FIG. 1 is a schematic diagram of a structure of two adjacent storage units on a DRAM;
FIG. 2 is a schematic diagram of a structure of a memory-isolated virtual machine;
FIG. 3 is a schematic flowchart of a method for virtual machine memory integrity protection according to an embodiment of the present disclosure;
FIG. 4 is a schematic diagram of a product architecture corresponding to the method embodiment illustrated in FIG. 3;
FIG. 5 is a schematic diagram of a flow of writing data into a DRAM based on the product architecture illustrated in FIG. 3;
FIG. 6 is a schematic diagram of a flow of reading data from a DRAM based on the product architecture illustrated in FIG. 3;
FIG. 7 is a schematic diagram of a startup flow of a memory-isolated virtual machine in a method for virtual machine memory integrity protection according to an embodiment of the present disclosure;
FIG. 8 is a schematic diagram of a processing flow in the case where a nested page fault occurs in a memory-isolated virtual machine in a method for virtual machine memory integrity protection according to an embodiment of the present disclosure;
FIG. 9 is a schematic diagram of an error notification in the case where an integrity check failure occurs in a method for virtual machine memory integrity protection according to an embodiment of the present disclosure;
FIG. 10 is a schematic diagram of a structure of an apparatus for virtual machine memory integrity protection according to an embodiment of the present disclosure; and
FIG. 11 is a schematic diagram of a structure of an electronic device according to an embodiment of the present disclosure.

### DETAILED DESCRIPTION

The embodiments of the present disclosure are described in detail below in conjunction with the drawings.

It should be apparent that the embodiments described herein are just a part but not all of the embodiments of the present disclosure. Based on the embodiments of the present disclosure, those skilled in the art can obtain other embodiment(s), without any inventive work, which should be within the scope of the present disclosure.

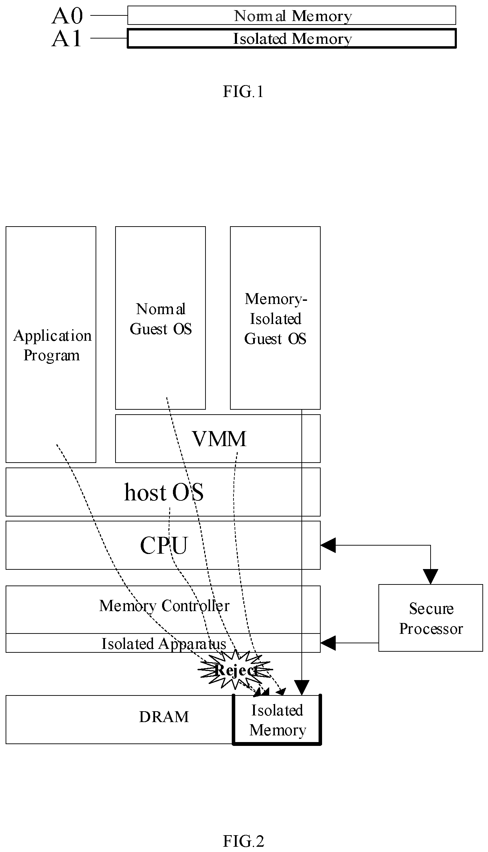

As illustrated in FIG. 1, A0 and A1 are two adjacent storage units, A0 is a normal memory and A1 is an isolated memory. If an address of A0 is refreshed frequently, it will cause the data of A1 to change, so attackers can tamper with the isolated protected memory by utilizing the normal memory A0. Thus, memory integrity protection feature is required for a memory-isolated virtual machine.

For example, a memory-isolated virtual machine based on a secure processor (as illustrated in FIG. 1) lacks memory integrity protection feature, and there is a possibility of illegal tampering with memory data within the virtual machine.

As illustrated in FIG. 2, a memory-isolated virtual machine generally adds an isolated apparatus in a memory controller, and the isolated apparatus is responsible for providing accessing control authorities for the protected isolated memory, i.e., the isolated memory can only be accessed by the memory-isolated virtual machine to which the isolated memory belongs; and the others, including a host Operation System (host OS), application programs, normal virtual machines, and Virtual Machine Monitors (VMMs), cannot access the isolated memory, which ensures the memory data security of the memory-isolated virtual machine regarding to the hardware. The guest OS illustrated in the FIG. 2 is a virtual machine operating system.

The secure processor, which is responsible for the memory of the memory-isolated virtual machine, is an apparatus that can be trusted and cannot be modified by x86 software. When a nested page fault error occurs in a memory-isolated virtual machine, the secure processor allocates memory from the isolated memory and writes virtual machine information vmid (Virtual Machine ID) to which the currently allocated memory belongs into the isolated apparatus of the memory controller. An attribute table of <HPA, vmid> is maintained within the isolated apparatus, and the HPA is a Host Physical Address. In theory, it is impossible for a private memory of a memory-isolated virtual machine to be modified by other software based on x86. However, due to DRAM rowhammer or physical attacks, and the like, attackers can tamper with a secure memory (i.e., an isolated memory) of a memory-isolated virtual machine under certain conditions.

Thus, the memory-isolated virtual machine based on the secure processor (as illustrated in FIG. 1) lacks the memory integrity protection feature, and there is a possibility of illegal tampering with the memory data within the virtual machine.

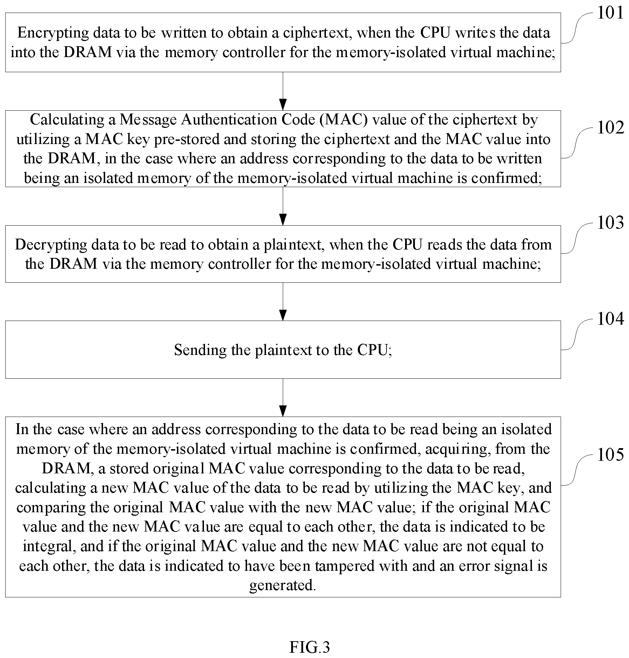

At least one embodiment of the present disclosure provides a method for virtual machine memory integrity protection, being applicable to a memory controller in an electronic device (which has an architecture that may be appropriately referenced to FIG. 2), the electronic device includes a Central Processing Unit (CPU), the memory controller, a Dynamic Random Access Memory (DRAM), and a secure processor, the electronic device is provided with at least one memory-isolated virtual machine, as illustrated in FIG. 3, and the method includes the following steps.

Step 101: encrypting data to be written to obtain a ciphertext, when the CPU writes the data into the DRAM via the memory controller for the memory-isolated virtual machine.

Specific encryption details may be employed using conventional techniques in the art and will not be described in detail herein.

Step 102: calculating a Message Authentication Code (MAC) value of the ciphertext by utilizing a MAC key pre-stored and storing the ciphertext and the MAC value into the DRAM, in the case where an address corresponding to the data to be written being an isolated memory of the memory-isolated virtual machine is confirmed.

In the step 102, a region (used as a reserved memory) in the DRAM is divided for storing MAC values. The length of a set of data is usually 512 bits (i.e., the length of the MAC value may also be 512 bits), which consumes only about 6% of the system memory.

Step 103: decrypting data to be read to obtain a plaintext, when the CPU reads the data from the DRAM via the memory controller for the memory-isolated virtual machine.

Step 104: sending the plaintext to the CPU.

In the step 104, specifically, the plaintext may be transmitted to a CPU cache line via a CPU bus.

Step 105: in the case where an address corresponding to the data to be read being an isolated memory of the memory-isolated virtual machine is confirmed, acquiring, from the DRAM, a stored original MAC value corresponding to the data to be read, calculating a new MAC value of the data to be read by utilizing the MAC key, and comparing the original MAC value with the new MAC value; if the original MAC value and the new MAC value are equal to each other, the data is indicated to be integral, and if the original MAC value and the new MAC value are not equal to each other, the data is indicated to have been tampered with and an error signal is generated.

As an optional embodiment, the calculation of the MAC value in the above-mentioned steps 102 and 105 may be obtained, for example, by utilizing a Hash-based Message Authentication Code (HMAC) algorithm.

As another optional embodiment, in the above-mentioned steps 102 and 105, the MAC key is randomly generated, by the secure processor, for the memory-isolated virtual machine when the memory-isolated virtual machine is started. In specific implementations, one MAC key table may be maintained in the memory controller, the MAC key table is configured by the secure processor (SP) and configures a random key using a vmid (Virtual Machine ID) as a virtual machine key flag for the memory-isolated virtual machine, upon the SP being started in the memory-isolated virtual machine. In such way, the MAC key is created for each memory-isolated virtual machine by the SP, ensuring the independence of integrity protection information between virtual machines.

As a further optional embodiment, in order to facilitate users to choose whether to enable the memory integrity protection feature, the electronic device may be provided with an identifier bit for controlling whether the memory integrity protection feature is enabled or not, the identifier bit may specifically be the aforementioned MAC key, which may be set that the MAC key being not all zeros indicates the integrity protection being enabled while the MAC key being all zeros indicates the integrity protection being disabled. In this case, calculating the Message Authentication Code (MAC) value of the ciphertext by utilizing the MAC key pre-stored and storing the ciphertext and the MAC value into the DRAM, in the case where an address corresponding to the data to be written being an isolated memory of the memory-isolated virtual machine is confirmed, includes the following steps.

Step 1021: determining whether the memory integrity protection feature is enabled or not according to the identifier bit.

Step 1022: calculating the MAC value of the ciphertext by utilizing the MAC key pre-stored and storing the ciphertext and the MAC value into the DRAM, in the case where the memory integrity protection feature is enabled and the address corresponding to the data to be written being an isolated memory of the memory-isolated virtual machine is confirmed.

In this step, if the memory integrity protection feature is not enabled, a conventional process can be followed without calculating the MAC value, and the ciphertext is stored to the DRAM directly.

Similarly, in the case where an address corresponding to the data to be read being an isolated memory of the memory-isolated virtual machine is confirmed, acquiring, from the DRAM, a stored original MAC value corresponding to the data to be read, calculating a new MAC value of the data to be read by utilizing the MAC key, and comparing the original MAC value with the new MAC value; if the original MAC value and the new MAC value are equal to each other, the data is indicated to be integral, and if the original MAC value and the new MAC value are not equal to each other, the data is indicated to have been tampered with and an error signal is generated, includes the following steps.

Step 1051: determining whether the memory integrity protection feature is enabled or not according to the identifier bit.

Step 1052: in the case where the memory integrity protection feature is enabled and the address corresponding to the data to be read being an isolated memory of the memory-isolated virtual machine is confirmed, acquiring, from the DRAM, the stored original MAC value corresponding to the data to be read, calculating the new MAC value of the data to be read by utilizing the MAC key, and comparing the original MAC value with the new MAC value; if the original MAC value and the new MAC value are equal to each other, the data is indicated to be integral, and if the original MAC value and the new MAC value are not equal to each other, the data is indicated to have been tampered with and an error signal is generated.

In this step, if the memory integrity protection feature is not enabled, a conventional process can be followed and this step may be skipped.

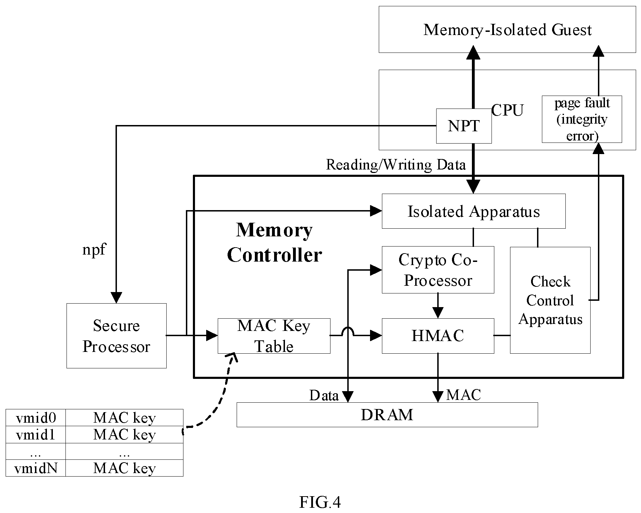

In order to facilitate the execution of operations of encryption and decryption, MAC value calculation, and MAC value comparison in the above-mentioned steps 101 to 105, entity modules, such as Crypto Co-processors, HMAC (for digest calculation) modules/engines, and check control apparatuses and the like, may be provided accordingly in the memory controller to provide integrity protection for the memory data. In this case, the architecture of the memory controller may be illustrated in FIG. 4, in which the guest is the virtual machine.

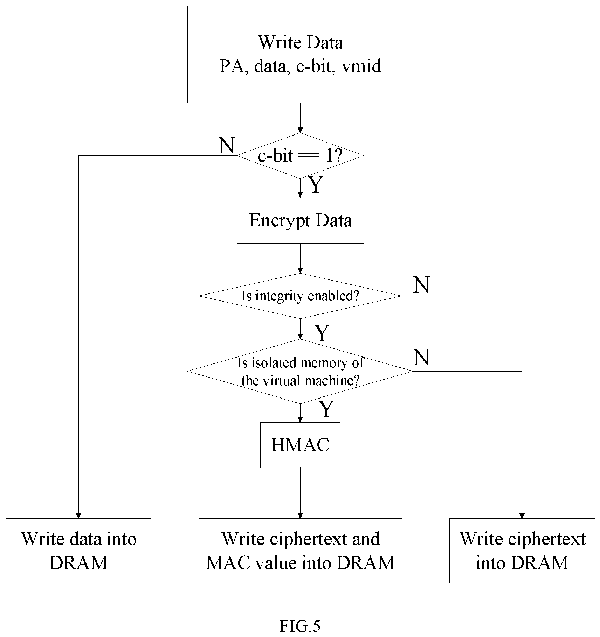

Based on the architecture of the memory controller in FIG. 4, after utilizing the method for virtual machine memory integrity protection according to an embodiment of the present disclosure, the specific data writing process may be referred to FIG. 5. As illustrated in FIG. 5, when the virtual machine writes data into the DRAM through the memory controller, the CPU sends the vmid and the memory address HPA of the current virtual machine to the memory controller, and the specific process may be described as below.

Step 1: the memory controller determines whether a c-bit encryption bit is 1 (encryption flag bit, c-bit=0 represents without encryption and c-bit=1 represents with encryption, usually in the 47th bit within the address). If the c-bit is equal to 1, continue; otherwise, the data is stored directly into the DRAM, and turn to step 7. Here, an integrity protection is only for the encrypted data, and there is less significance for applying the integrity protection for the unencrypted data.

Step 2: the Crypto Co-processor performs an encryption operation on the data.

Step 3: the HMAC module utilizes the vmid to query the key in the corresponding slot (table location) in the MAC key table to determine whether the current memory integrity protection feature is enabled or not. If the key is non-null, the memory integrity protection feature is enabled, otherwise the memory integrity protection feature is disabled.

Step 4: the HMAC module, from the isolation apparatus, determines whether the current memory HPA is an isolated memory of an isolated virtual machine of the current vmid or not. If the current memory HPA is not the isolated memory of the isolated virtual machine of the current vmid, then turn to step 6.

Step 5: the HMAC module obtains the MAC key corresponding to the vmid from the MAC key table, performs HMAC calculation to obtain the MAC value of the current memory data, and stores the MAC value into the DRAM.

Step 6: storing the ciphertext into data bits of the DRAM.

Step 7: end.

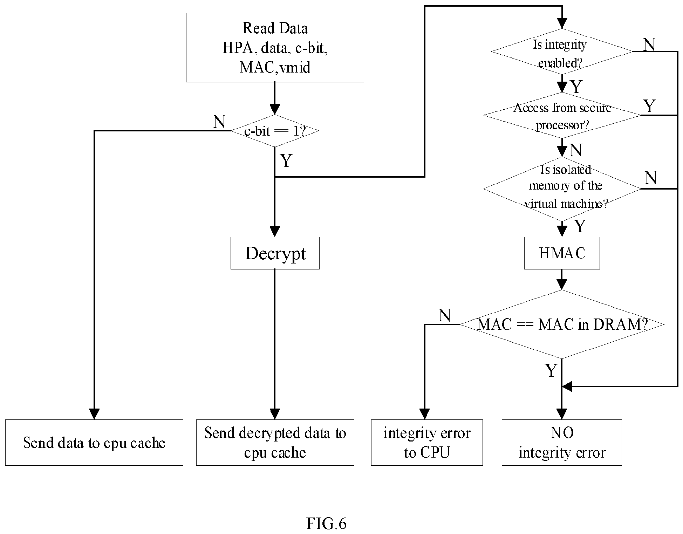

Based on the architecture of the memory controller in FIG. 4, after utilizing the method for virtual machine memory integrity protection according to an embodiment of the present disclosure, the specific data reading process may be referred to in FIG. 6. As illustrated in FIG. 6, when the virtual machine reads the data from the DRAM through the memory controller, the CPU sends the vmid and the memory address HPA of the current virtual machine to the memory controller similarly, and the specific process may be described as below.

Step 1: the memory controller reads the data and MAC values from the DRAM based on the access address HPA.

Step 2: determining whether the data needs to be decrypted according to the c-bit encryption bit. If c-bit is equal to 1, then the data is decrypted through the Crypto Co-processor and the decrypted data is sent to the CPU cache line; otherwise, the read data is sent directly to the CPU cache line and turn to step 8.

Step 3: the HMAC module simultaneously performs the HMAC control logic to query the slot corresponding to the MAC key table with the vmid of the virtual machine, and determines whether the virtual machine memory integrity function of the vmid is enabled or not according to whether the key is empty or not. If the virtual machine memory integrity function of the vmid is not enabled, then turn to step 8.

Step 4: determining whether a current memory reading request is from the secure processor or not. If the request is from the secure processor, then do not perform the integrity protection logic and turn to step 8.

Here, there is no need for providing integrity protection to a data reading request initiated by the SP, because the secure processor and its firmware can be trusted; and only the data reading request initiated by x86-side software needs the integrity protection.

Step 5: the HMAC module, from the isolation apparatus, determines whether the current memory HPA is an isolated memory of an isolated virtual machine of the current vmid or not. If the current memory HPA is not the isolated memory of the isolated virtual machine of the current vmid, then turn to step 8.

Step 6: querying the MAC key table with the vmid to obtain the MAC key of the vmid; performing HMAC operation to obtain a MAC value and comparing the MAC value with a MAC value read from the DRAM, if the MAC value and the MAC value read from the DRAM are equal to each other, then turn to step 8.

Step 7: sending an integrity check error to the x86 CPU core to provide a pagefaulterror bit and generating a page error. Generally, subsequent to the occurrence of this error, the virtual machine finds that the execution environment is not secure, shuts down the machine, and notifies the managerial staff to ensure data security.

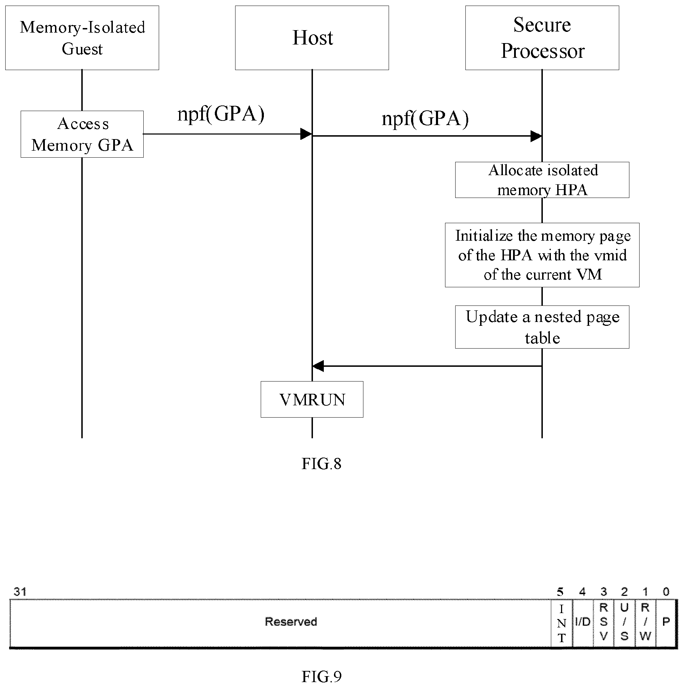

In the step, if the data has been tampered with and an error signal is generated, then in order to facilitate notifying users, an integrity check error may be sent to the x86 CPU core and the pagefaulterror bit may be provided to generate a page error; for example, this error notification may be integrated into the existing type of the page error by adding a type of integrity check error, as illustrated in FIG. 9, in the reserved field of the existing pagefaulterror, one of the bits, for example by adding bit5, is served as an INT bit. When INT=1, it indicates that the data at the currently accessed address has been tampered with. As illustrated in FIG. 4, a check control apparatus fails to check the integrity and sends an error to the CPU, and the page error is triggered subsequent to the CPU setting INT bit as 1.

Step 8: end.

The method embodiments of the present disclosure illustrated in FIG. 4-FIG. 6 utilize the addition of modules such as an HMAC module, a check control apparatus, and other modules within the memory controller, and store both the data and the MAC value in the DRAM. When reading, a stored MAC value is utilized to compare with the recalculated MAC value to determine whether the tampering has occurred or not and to generate an integrity check error, which is injected into the page error in the virtual machine to protect the data security of the memory-isolated virtual machine.

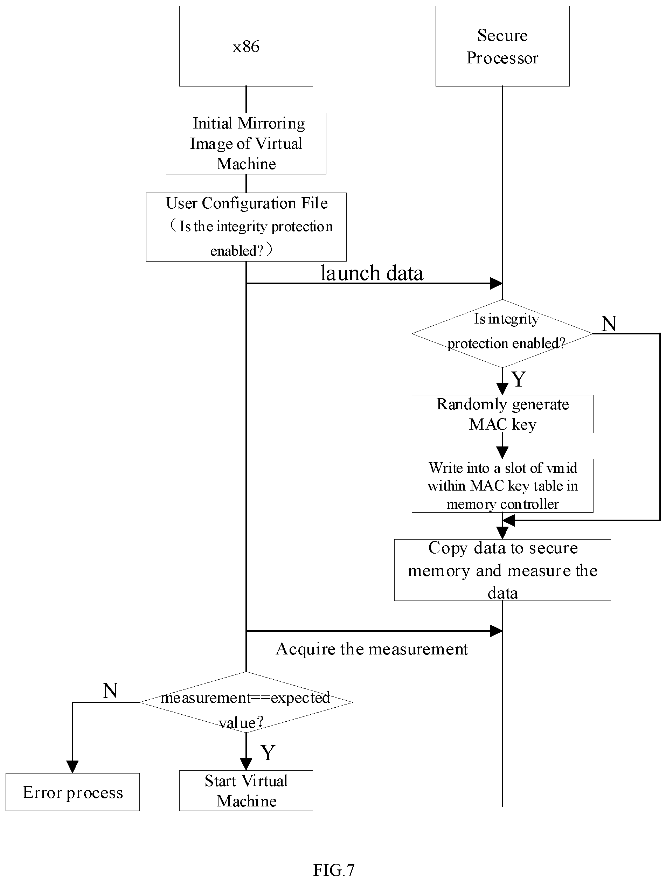

Based on the architecture of the memory controller in FIG. 4, after utilizing the method for virtual machine memory integrity protection according to an embodiment of the present disclosure, a startup process of the memory-isolated virtual machine needs to be adjusted adaptively, as illustrated in FIG. 7, users prepare an initial guest image of a virtual machine and a user configuration file (including an integrity protection enable flag, by which users decide whether integrity protection feature is currently required or not). The specific process may be described as below.

Step 1: the x86-side software sends the initial guest image and configuration information to the secure processor via commands such as launch data.

Step 2: the secure processor checks the integrity protection enable flag of the current configuration information. If the integrity protection is enabled, then the MAC key is randomly generated and the key is written into a slot corresponding to the vmid within the MAC key table in the memory controller; and if the integrity protection is not enabled, the slot corresponding to the vmid is set to null.

Step 3: the secure processor measures the initial guest image and the configuration file to generate measurement information;

Step 4: the host obtains the measurement from the secure processor and notifies users, if users confirm that the measurement returned by the secure processor are consistent with the expectation, then the memory-isolated virtual machine is started, otherwise processed as an error.

As a further optional embodiment, for example, an initialization operation is performed on the memory of the memory-isolated virtual machine to facilitate performing the method for virtual machine memory integrity protection according to the embodiments of the present disclosure smoothly and normally, that is: before encrypting data to be written to obtain the ciphertext, when the CPU writes the data into the DRAM via the memory controller for the memory-isolated virtual machine, the method includes the following steps.

Step 1001: receiving a nested page fault error notification sent by a host, when a nested page fault occurs with the memory-isolated virtual machine accessing a memory virtual machine physical address GPA, in which the nested page fault error notification contains the GPA to be accessed, and in the case where the GPA to be accessed being an isolated memory is confirmed by the secure processor, the secure processor is configured to assign a host physical address (HPA) corresponding to the isolated memory for the memory-isolated virtual machine, send an initialization request to initialize a memory page of the HPA, and update a virtual machine nested page table.

Step 1002: calculating a MAC value of initialized data by utilizing the MAC key pre-stored and storing the initialized data and the MAC value into the DRAM, after receiving the initialization request from the secure processor.

In such way, when a nested page fault occurs with a virtual machine accessing a memory GPA, the secure processor may be utilized to complete the initialization operation on the memory of the memory-isolated virtual machine, and the specific flow is illustrated in FIG. 8, which may include the following steps.

Step 1: the host receives a nested page fault (npf) and acquires a GPA of the page fault, and forwards the npf and the GPA to the secure processor.

Step 2: the secure processor checks the attribute of the GPA and then allocates the isolated memory HPA in response to finding that the GPA address belongs to the isolated memory.

Step 3: the secure processor initializes the memory page of the HPA with the vmid of the current virtual machine (may write the initialized data with all zeros). In this case, after receiving a writing/initialization request, the memory controller generates a MAC value with a MAC key of the vmid, and writes the initialized data and the MAC value into the DRAM.

Step 4: the secure processor updates a virtual machine nested page table, and the host continues to perform an instruction of VMRUN to run the virtual machine.

In summary, the method for virtual machine memory integrity protection according to the embodiments of the present disclosure is applicable to a memory controller in an electronic device, the electronic device includes a CPU, the memory controller, a DRAM, and a secure processor, and the electronic device is provided with at least one memory-isolated virtual machine. The method includes: first encrypting data to be written to obtain the ciphertext, when the CPU writes the data into the DRAM via the memory controller for the memory-isolated virtual machine; then calculating the MAC value of the ciphertext by utilizing the MAC key pre-stored and storing the ciphertext and the MAC value into the DRAM, in the case where an address corresponding to the data to be written being the isolated memory of the memory-isolated virtual machine is confirmed; then decrypting data to be read to obtain a plaintext, when the CPU reads the data from the DRAM via the memory controller for the memory-isolated virtual machine; and sending the plaintext to the CPU; finally in the case where an address corresponding to the data to be read being the isolated memory of the memory-isolated virtual machine is confirmed, acquiring, from the DRAM, the stored original MAC value corresponding to the data to be read, calculating the new MAC value of the data to be read by utilizing the MAC key, and comparing the original MAC value with the new MAC value; if the original MAC value and the new MAC value are equal to each other, the data is indicated to be integral, and if the original MAC value and the new MAC value are not equal to each other, the data is indicated to have been tampered with and an error signal is generated. In such way, the embodiments of the present disclosure are capable of providing memory integrity protection for the memory of the memory-isolated virtual machine (i.e., the DRAM), avoiding illegal tampering with memory data within the virtual machine; and the MAC value is stored in the DRAM, with little space occupied, thus there is no need to occupy redundant error checking and correcting (ecc) bit (due to the number limitation of the ecc bit, the MAC value needs to be split and then stored, which seriously reduces the error correction capability of the data, and the data error will not be able to be detected in response to the decreased error correction capability of the memory, resulting in catastrophic consequences), and will not affect the error correction capability. The embodiments of the present disclosure are capable of providing memory integrity protection for the memory of the memory-isolated virtual machine to protect data from DRAM rowhammer or physical attacks, ensuring the security of the data.

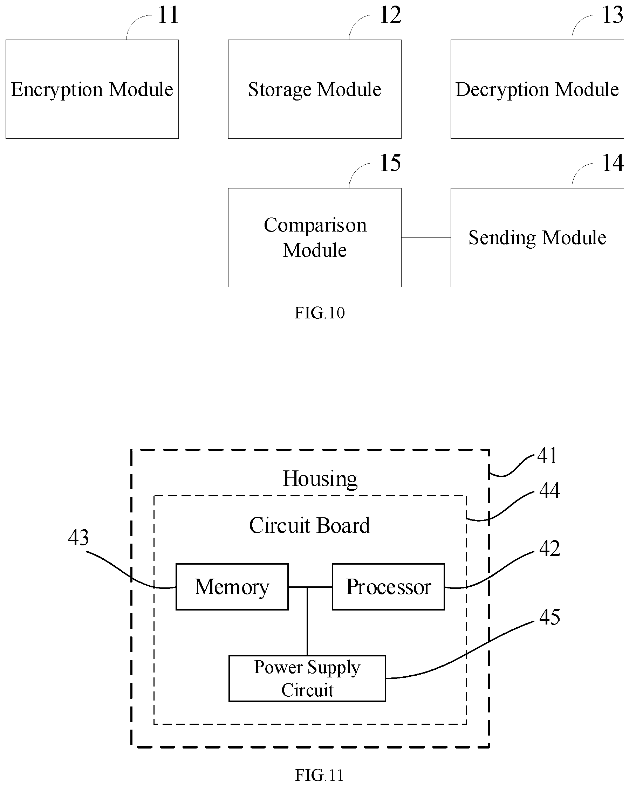

At least one embodiment of the present disclosure further provides an apparatus for virtual machine memory integrity protection (i.e., a memory controller), which is applicable to a memory controller in an electronic device, the electronic device includes a CPU, the memory controller, a DRAM, and a secure processor, and the electronic device is provided with at least one memory-isolated virtual machine, as illustrated in FIG. 10, the apparatus includes:
an encryption module 11, configured to encrypt data to be written to obtain a ciphertext, when the CPU writes the data into the DRAM via the memory controller for the memory-isolated virtual machine;
a storage module 12, configured to calculate a MAC value of the ciphertext by utilizing a MAC key pre-stored and store the ciphertext and the MAC value into the DRAM, in the case where an address corresponding to the data to be written being an isolated memory of the memory-isolated virtual machine is confirmed;
a decryption module 13, configured to decrypt data to be read to obtain a plaintext, when the CPU reads the data from the DRAM via the memory controller for the memory-isolated virtual machine;
a sending module 14, configured to send the plaintext to the CPU;
and a comparison module 15, configured to, in the case where an address corresponding to the data to be read being an isolated memory of the memory-isolated virtual machine is determined, acquire, from the DRAM, a stored original MAC value corresponding to the data to be read, calculate a new MAC value of the data to be read by utilizing the MAC key, and compare the original MAC value with the new MAC value, in which if the original MAC value and the new MAC value are equal to each other, the data is indicated to be integral, and if the original MAC value and the new MAC value are not equal to each other, the data is indicated to have been tampered with and an error signal is generated.

The apparatus according to the present embodiment may be configured to perform the technique solution of the method embodiment illustrated in FIG. 3, which has similar realization principle and technical effect, and will not be repeatedly described herein.

For example, the MAC value is obtained by a calculation by utilizing a hash-based message authentication code algorithm.

And/or the MAC key is randomly generated, by the secure processor, for the memory-isolated virtual machine when the memory-isolated virtual machine is started.

For example, the electronic device is provided with an identifier bit for controlling whether a memory integrity protection feature is enabled or not.

The storage module 12 includes:
a first determination sub-unit, configured to determine whether the memory integrity protection feature is enabled or not according to the identifier bit;
and a storage sub-unit, configured to calculate the MAC value of the ciphertext by utilizing the MAC key pre-stored and store the ciphertext and the MAC value into the DRAM, in the case where the memory integrity protection feature is enabled and the address corresponding to the data to be written being an isolated memory of the memory-isolated virtual machine is confirmed.

The comparison module 15 includes:
a second determination sub-unit, configured to determine whether the memory integrity protection feature is enabled or not according to the identifier bit;
and a comparison sub-unit, configured to, in the case where the memory integrity protection feature is enabled and the address corresponding to the data to be read being an isolated memory of the memory-isolated virtual machine is confirmed, acquire, from the DRAM, the stored original MAC value corresponding to the data to be read, calculate the new MAC value of the data to be read by utilizing the MAC key, and compare the original MAC value with the new MAC value, in which if the original MAC value and the new MAC value are equal to each other, the data is indicated to be integral, and if the original MAC value and the new MAC value are not equal to each other, the data is indicated to have been tampered with and an error signal is generated.

For example, the apparatus further includes:
a receiving module, configured to receive a nested page fault error notification sent by a host, when a nested page fault occurs with the memory-isolated virtual machine accessing a memory virtual machine physical address GPA, in which the nested page fault error notification contains the GPA to be accessed, and in the case where the GPA to be accessed being an isolated memory is confirmed by the secure processor, the secure processor is configured to assign a host physical address (HPA) corresponding to the isolated memory for the memory-isolated virtual machine, send an initialization request to initialize a memory page of the HPA, and update a virtual machine nested page table;
and an initialization module, configured to calculate a MAC value of initialized data by utilizing the MAC key pre-stored and store the initialized data and the MAC value into the DRAM, after receiving the initialization request from the secure processor.

At least one embodiment of the present disclosure further provides an electronic device, and FIG. 11 is a schematic diagram of a structure of the electronic device according to an embodiment of the present disclosure, which can implement the process of the embodiment of the present disclosure illustrated in FIG. 3. As illustrated in FIG. 11, the above-mentioned electronic device may include a housing 41, a processor 42, a memory 43, a circuit board 44, and a power supply circuit 45, the circuit board 44 is provided inside a space enclosed by the housing 41, the processor 42 and the memory 43 are provided on the circuit board 44; the power supply circuit 45 is configured to supply power for circuits or components of the electronic device; the memory 43 is configured to store executable program code; and the processor 42 is configured to execute the method according to any one of the embodiments of the present disclosure, by reading the executable program code stored in the memory 43 to execute a program corresponding to the executable program code.

The specific execution process of the above-mentioned steps performed by the processor 42 and the further steps performed by the processor 42 through executing the executable program code may be referred to the description of the embodiment of the present disclosure illustrated in FIG. 3, and will not be repeatedly described herein.

The electronic device is implemented in many forms, including but not limited to:
(1) Mobile Communication Devices: such devices are characterized by mobile communication capabilities and with the purpose of providing voice and data communications. Such terminals include: smartphones (e.g., iPhone), multimedia phones, feature phones, low-end cell phones, and the like.
(2) Ultra-mobile personal computer devices: such devices belong to a kind of personal computers with the functionality of computing and processing, generally having the characteristics of mobile Internet access. Such terminals include: PDAs, MIDs, and UMPC devices, e.g., iPad.
(3) Portable entertainment devices: such devices can display and play multimedia content. Such devices include: audio and video players (e.g. iPod), handheld game consoles, e-books, as well as smart toys and portable car navigation devices.
(4) Servers: devices that provide computing services, which has a composition including processors, hard disks, memories, system buses, and the like. Servers have similar architectures with general-purpose computers; however, due to the requirements of providing service with highly reliability, the servers have higher requirements on aspects such as processing power, stability, reliability, security, scalability, manageability, and the like.
(5) Other electronic devices with functionality of data interaction.

At least one embodiment of the present disclosure further provides a computer-readable storage medium, computer programs are stored in the computer-readable storage medium, and the computer programs can be executed by a processor to implement the steps of the method according to any one of the embodiments described above.

At least one embodiment of the present disclosure further provides an application program, and the application program can be executed to implement the method provided by any embodiment of the present disclosure.

It should be noted that in the present disclosure, relational terms such as "first," "second," etc. are only used to distinguish one entity or operation from another entity or operation, and do not necessarily require or imply the existence of any actual relationship or order between these entities or operations. Furthermore, the terms "comprise," "comprising," "include," "including," etc., or any other variant thereof are intended to cover non-exclusive inclusion, such that a process, method, article or device comprising a set of elements includes not only those elements, but also other elements not expressly listed, or other elements not expressly listed for the purpose of such a process, method, article or device, or elements that are inherent to such process, method, article or device. Without further limitation, an element defined by the phrase "includes a ..." does not preclude the existence of additional identical elements in the process, method, article or device that includes the element.

Each embodiment in the present disclosure is described in a relevant manner, the identical and similar parts of each embodiment can be referred to between each other, and in description, each embodiment focuses on the differences with other embodiments. In particular, for the embodiments of the apparatus, because they are basically similar to the embodiments of the method, they are described in a simpler manner, and thus the relevant parts can be referred to as corresponding parts in the description of the method embodiments. For the purpose of convenience in description, the above apparatus is described in terms of functions divided into various units/modules. Indeed, the functions of each unit/module can be realized in the same or more software and/or hardware when implementing the present disclosure.

Those of ordinary skill in the art may understand that the realization of all or part of the processes in the described embodiments of the method above can be completed by the computer programs commanding relevant hardware, and the programs may be stored in a computer-readable storage medium, and the programs may include processes in the embodiments of the described method above when executed. For example, the storage medium may be a magnetic disk, a CD-ROM, a Read-Only Memory (ROM), or a Random Access Memory (RAM), and the like.

What have been described above are only specific implementations of the present disclosure, the protection scope of the present disclosure is not limited thereto. Any modifications or substitutions easily occur to those skilled in the art within the technical scope of the present disclosure should be within the protection scope of the present disclosure. Therefore, the protection scope of the present disclosure should be based on the protection scope of the claims.

## Claims

1. A method for virtual machine memory integrity protection, being applicable to a memory controller in an electronic device, wherein the electronic device comprises a Central Processing Unit (CPU), the memory controller, a Dynamic Random Access Memory (DRAM), and a secure processor, the electronic device is provided with at least one memory-isolated virtual machine, and the method comprises:
encrypting data to be written to obtain a ciphertext, when the CPU writes the data into the DRAM via the memory controller for the memory-isolated virtual machine;
calculating a Message Authentication Code (MAC) value of the ciphertext by utilizing a MAC key pre-stored and storing the ciphertext and the MAC value into the DRAM, in a case where an address corresponding to the data to be written being an isolated memory of the memory-isolated virtual machine is confirmed;
decrypting data to be read to obtain a plaintext, when the CPU reads the data from the DRAM via the memory controller for the memory-isolated virtual machine;
sending the plaintext to the CPU; and
in a case where an address corresponding to the data to be read being an isolated memory of the memory-isolated virtual machine is confirmed, acquiring, from the DRAM, a stored original MAC value corresponding to the data to be read, calculating a new MAC value of the data to be read by utilizing the MAC key, and comparing the original MAC value with the new MAC value, wherein if the original MAC value and the new MAC value are equal to each other, the data is indicated to be integral, and if the original MAC value and the new MAC value are not equal to each other, the data is indicated to have been tampered with and an error signal is generated.

2. The method according to claim 1, wherein the MAC value is obtained by a calculation by utilizing a hash-based message authentication code algorithm; and/or
the MAC key is randomly generated, by the secure processor, for the memory-isolated virtual machine when the memory-isolated virtual machine is started.

3. The method according to claim 1 or 2, wherein the electronic device is provided with an identifier bit for controlling whether a memory integrity protection feature is enabled or not;
calculating a Message Authentication Code (MAC) value of the ciphertext by utilizing a MAC key pre-stored and storing the ciphertext and the MAC value into the DRAM, in a case where an address corresponding to the data to be written being an isolated memory of the memory-isolated virtual machine is confirmed, comprises:
determining whether the memory integrity protection feature is enabled or not according to the identifier bit; and
calculating the MAC value of the ciphertext by utilizing the MAC key pre-stored and storing the ciphertext and the MAC value into the DRAM, in a case where the memory integrity protection feature is enabled and the address corresponding to the data to be written being an isolated memory of the memory-isolated virtual machine is confirmed;
in a case where an address corresponding to the data to be read being an isolated memory of the memory-isolated virtual machine is confirmed, acquiring, from the DRAM, a stored original MAC value corresponding to the data to be read, calculating a new MAC value of the data to be read by utilizing the MAC key, and comparing the original MAC value with the new MAC value, wherein if the original MAC value and the new MAC value are equal to each other, the data is indicated to be integral, and if the original MAC value and the new MAC value are not equal to each other, the data is indicated to have been tampered with and an error signal is generated, comprises:
determining whether the memory integrity protection feature is enabled or not according to the identifier bit; and
in a case where the memory integrity protection feature is enabled and the address corresponding to the data to be read being an isolated memory of the memory-isolated virtual machine is confirmed, acquiring, from the DRAM, the stored original MAC value corresponding to the data to be read, calculating the new MAC value of the data to be read by utilizing the MAC key, and comparing the original MAC value with the new MAC value, wherein if the original MAC value and the new MAC value are equal to each other, the data is indicated to be integral, and if the original MAC value and the new MAC value are not equal to each other, the data is indicated to have been tampered with and an error signal is generated.

4. The method according to any one of claims 1 to 3, wherein before encrypting data to be written to obtain a ciphertext, when the CPU writes the data into the DRAM via the memory controller for the memory-isolated virtual machine, the method comprises:
receiving a nested page fault error notification sent by a host, when a nested page fault occurs with the memory-isolated virtual machine accessing a memory virtual machine physical address GPA, wherein the nested page fault error notification contains the GPA to be accessed, and in a case where the GPA to be accessed being an isolated memory is confirmed by the secure processor, the secure processor is configured to assign a host physical address (HPA) corresponding to the isolated memory for the memory-isolated virtual machine, send an initialization request to initialize a memory page of the HPA, and update a virtual machine nested page table; and
calculating a MAC value of initialized data by utilizing the MAC key pre-stored and storing the initialized data and the MAC value into the DRAM, after receiving the initialization request from the secure processor.

5. An apparatus for virtual machine memory integrity protection, being applicable to a memory controller in an electronic device, wherein the electronic device comprises a Central Processing Unit (CPU), the memory controller, a Dynamic Random Access Memory (DRAM), and a secure processor, the electronic device is provided with at least one memory-isolated virtual machine, and the apparatus comprises:
an encryption module, configured to encrypt data to be written to obtain a ciphertext, when the CPU writes the data into the DRAM via the memory controller for the memory-isolated virtual machine;
a storage module, configured to calculate a MAC value of the ciphertext by utilizing a MAC key pre-stored and store the ciphertext and the MAC value into the DRAM, in a case where an address corresponding to the data to be written being an isolated memory of the memory-isolated virtual machine is confirmed;
a decryption module, configured to decrypt data to be read to obtain a plaintext, when the CPU reads the data from the DRAM via the memory controller for the memory-isolated virtual machine;
a sending module, configured to send the plaintext to the CPU; and
a comparison module, configured to, in a case where an address corresponding to the data to be read being an isolated memory of the memory-isolated virtual machine is determined, acquire, from the DRAM, a stored original MAC value corresponding to the data to be read, calculate a new MAC value of the data to be read by utilizing the MAC key, and compare the original MAC value with the new MAC value, wherein if the original MAC value and the new MAC value are equal to each other, the data is indicated to be integral, and if the original MAC value and the new MAC value are not equal to each other, the data is indicated to have been tampered with and an error signal is generated.

6. The apparatus according to claim 5, wherein the MAC value is obtained by a calculation by utilizing a hash-based message authentication code algorithm; and/or
the MAC key is randomly generated, by the secure processor, for the memory-isolated virtual machine when the memory-isolated virtual machine is started.

7. The apparatus according to claim 5 or 6, wherein the electronic device is provided with an identifier bit for controlling whether a memory integrity protection feature is enabled or not;
the storage module comprises:
a first determination sub-unit, configured to determine whether the memory integrity protection feature is enabled or not according to the identifier bit; and
a storage sub-unit, configured to calculate the MAC value of the ciphertext by utilizing the MAC key pre-stored and store the ciphertext and the MAC value into the DRAM, in a case where the memory integrity protection feature is enabled and the address corresponding to the data to be written being an isolated memory of the memory-isolated virtual machine is confirmed; and
the comparison module comprises:
a second determination sub-unit, configured to determine whether the memory integrity protection feature is enabled or not according to the identifier bit; and
a comparison sub-unit, configured to, in a case where the memory integrity protection feature is enabled and the address corresponding to the data to be read being an isolated memory of the memory-isolated virtual machine is confirmed, acquire, from the DRAM, the stored original MAC value corresponding to the data to be read, calculate the new MAC value of the data to be read by utilizing the MAC key, and compare the original MAC value with the new MAC value, wherein if the original MAC value and the new MAC value are equal to each other, the data is indicated to be integral, and if the original MAC value and the new MAC value are not equal to each other, the data is indicated to have been tampered with and an error signal is generated.

8. The apparatus according to any one of claims 5 to 7, further comprising:
a receiving module, configured to receive a nested page fault error notification sent by a host, when a nested page fault occurs with the memory-isolated virtual machine accessing a memory virtual machine physical address GPA, wherein the nested page fault error notification contains the GPA to be accessed, and in a case where the GPA to be accessed being an isolated memory is confirmed by the secure processor, the secure processor is configured to assign a host physical address (HPA) corresponding to the isolated memory for the memory-isolated virtual machine, send an initialization request to initialize a memory page of the HPA, and update a virtual machine nested page table; and
an initialization module, configured to calculate a MAC value of initialized data by utilizing the MAC key pre-stored and store the initialized data and the MAC value into the DRAM, after receiving the initialization request from the secure processor.

9. An electronic device, comprising a housing, a processor, a memory, a circuit board, and a power supply circuit, wherein the circuit board is provided inside a space enclosed by the housing; the processor and the memory are provided on the circuit board; the power supply circuit is configured to supply power for circuits or components of the electronic device; the memory is configured to store executable program code; and the processor is configured to execute the method according to any one of claims 1 to 4, by reading the executable program code stored in the memory to execute a program corresponding to the executable program code.

10. A computer-readable storage medium, storing one or more programs, wherein the one or more programs is capable of being executed by one or more processors to implement the method according to any one of claims 1 to 4.
